# EUROPEAN PATENT SPECIFICATION

(11) **EP 4 192 616 B1**
(45) Date of publication and mention of the grant of the patent: **17.12.2025**
(21) Application number: 20949669.4
(22) Date of filing: 10.08.2020
(51) Int. Cl.: B01J 31/04, B01J 31/22, F01N 3/20, F01N 11/00, B01D 53/90, B01J 21/06, B01J 37/14, B01D 53/94

(54) **STABILIZATION OF AQUEOUS UREA SOLUTIONS CONTAINING ORGANOMETALLIC CATALYST PRECURSORS**
STABILISIERUNG VON METALLORGANISCHE KATALYSATORVORLÄUFER ENTHALTENDEN WÄSSRIGEN HARNSTOFFLÖSUNGEN
STABILISATION DE SOLUTIONS AQUEUSES D'URÉE CONTENANT DES PRÉCURSEURS DE CATALYSEUR ORGANOMÉTALLIQUE

(43) Date of publication of application: 14.06.2023
(73) Proprietor: SOUTHWEST RESEARCH INSTITUTE, San Antonio, Texas 78238-5166 (US)
(72) Inventor: HARTLEY, Ryan C., Kerrville, Texas 78028 (US); HENRY, Cary A., Helotes, Texas 78023 (US)
(74) Representative: Lucke, Andreas
(86) International application number: PCT/US2020/070392
(87) International publication number: WO 2022/035459

(56) References cited:
- JP-A- 2006 110 526
- US-A1- 2005 011 183
- US-B1- 10 267 196
- US-B1- 10 378 411
- US-B1- 10 378 411
- US-B1- 10 774 715
- US-B1- 6 361 754

## Description

### Field of the Invention

The present invention is directed at stabilization of aqueous urea solutions containing organometallic catalyst precursors. Stabilization is achieved by monitoring and controlling the solution pH.

### Background

Internal combustion engines such as those found in cars and trucks may produce combustion byproducts and/or products of incomplete combustion which may exist in the engine exhaust and emit into the environment. Per emissions regulations, the exhaust may be treated to reduce the concentration of such products and, therefore, reduce pollution. Although spark ignition (i.e., gasoline) engines may use three-way catalytic converters to satisfy emissions regulations, compression ignition (i.e., diesel) engines typically employ two-way catalytic converters which may not efficiently reduce nitrogen oxides (NOx). Accordingly, diesel engines may include selective catalytic reduction (SCR) systems in order to seek reduction in nitrogen oxide concentrations. Improving performance of such systems remains an ongoing area of research and development.

For example, document US 10378411 B1 discloses an apparatus for dosing diesel emission fluid into an exhaust system, the apparatus comprising separate reservoirs for a diesel emission fluid and an aqueous organometallic catalyst precursor.

### Summary

The present invention is directed at a method of controlling the pH level of a diesel emission fluid reservoir. The reservoir contains an aqueous based urea solution including a catalyst precursor comprising a water soluble organometallic compound wherein the reservoir includes a pH probe to monitor pH of the solution. The pH is controlled to a value of ≤ 10.0.

In a preferred embodiment, the pH is controlled to a value of ≤ 10.0 by selecting and implementing at least two of the following pH adjusting procedures: (i) introducing exhaust gas comprising CO₂ into said reservoir; (ii) introducing air into said reservoir; or (iii) introducing NOx into said reservoir.

In a related embodiment, the present invention is directed at a diesel emission fluid apparatus comprising a diesel emission fluid reservoir to contain an aqueous based urea solution including a catalyst precursor comprising a water soluble organometallic compound, wherein the reservoir includes a pH probe to monitor pH of said solution. A controller is provided which monitors and is configured to control the pH to a level of < 10.0 by selecting and implementing at least one of the following: (i) introducing exhaust gas comprising CO₂ into the reservoir; (ii) introducing air into the reservoir; or (iii) introducing NOx into said reservoir.

### Description Of The Drawings

The various aspects and advantages of the present disclosure may be better understood by reference to the following detailed description, in conjunction with the accompanying drawings, wherein:
**FIG. 1** illustrates in block diagram form an overview of a diesel engine outputting exhaust gas to an exhaust gas after-treatment system.
**FIG. 2** illustrates the potential reactions of urea in the exhaust gas environment of a SCR system.
**FIG. 3A** illustrates the effect of ATO addition at 0.1 mol % to urea water solutions with respect to deposit formation.
**FIG. 3B** illustrates the effect of ATO addition at 0.05 mol % to urea water solutions with respect to deposit formation.
**FIG. 3C** illustrates the effect of urea water solution without the addition of ATO with respect to deposit formation.
**FIG. 4** illustrates the effect of ATO addition to urea water solutions evaluated by thermo gravimetric analysis (TGA).
**FIG. 5** illustrates in block diagram an overview of a diesel engine outputting exhaust gas and the use of pH control to regulate the pH of the diesel emissions fluid reservoir.

### Detailed Description

Urea is used as a convenient source of ammonia (NH₃) reductant in SCR systems for decreasing NOx emissions from diesel engines. Urea (H₂NCONH₂) is therefore a component of what is termed a diesel emission fluid (DEF) that is preferably introduced as a spray into the exhaust gases upstream of the SCR catalyst. The DEF vaporizes and the urea thermally decomposes into NH₃ and HNCO (isocyanic acid), with subsequent hydrolysis of the HNCO into additional amounts of NH₃ along with CO₂:

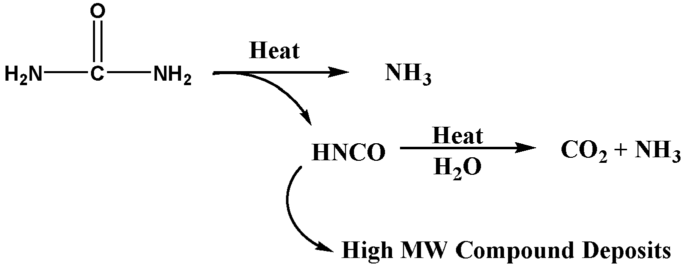

The ammonia as formed above may then be utilized as the reductant in selective catalytic reduction (SCR) to reduce NOx to nitrogen and water. Such reactions include the following:

**4NH₃ + 4NO + O₂ → 4N₂ + 6H₂O**

**2NH₃ + NO + NO₂ → 2N₂ + 3H₂O**

**8NH₃ + 6NO₂ → 7N₂ + 12H₂O**

However, urea is observed to deposit on the walls of the exhaust system and/or the SCR catalyst as solid urea or as a deposit mixture of urea and isocyanic acid. Over time, in the presence of relatively hot exhaust gases, secondary reactions can occur in which such deposits (urea and isocyanic acid) convert to a range of relatively higher molecular weight compounds. Such higher molecular weight compound deposits may include one or more of the following:

**Table 1**

| Deposits On Exhaust System Or SCR Catalyst | |
|---|---|
| **Compound** | **Structure** |
| Biuret | 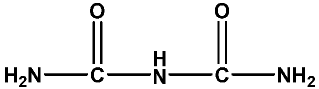 |
| Triuret | 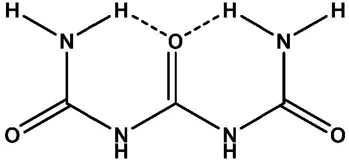 |
| Cyanuric Acid | 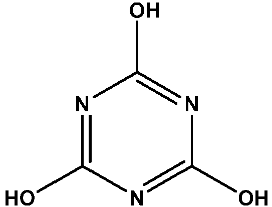 |
| Ammelide | 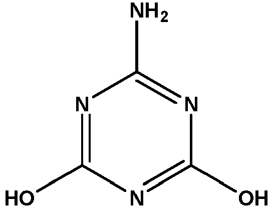 |
| Ammeline | 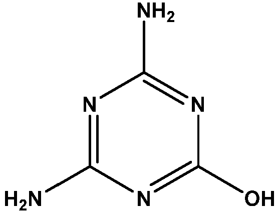 |
| Melamine | 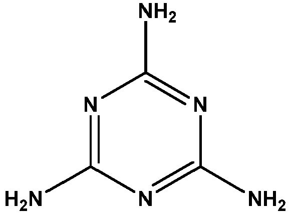 |

The deposits, once formed, then serve to reduce the efficiency of the exhaust gas treatment by either reducing exhaust gas flow and/or reducing efficiency of the SCR catalyst from efficient reaction with ammonia to reduce NOx gas concentration. In addition, although heating to elevated temperature such as in the range of 193 °C to 700 °C can serve to decompose the above identified relatively high molecular weight deposits, as well as polymeric type deposits, it can be appreciated that this adds a level of complexity to the system and potential for other associated problems.

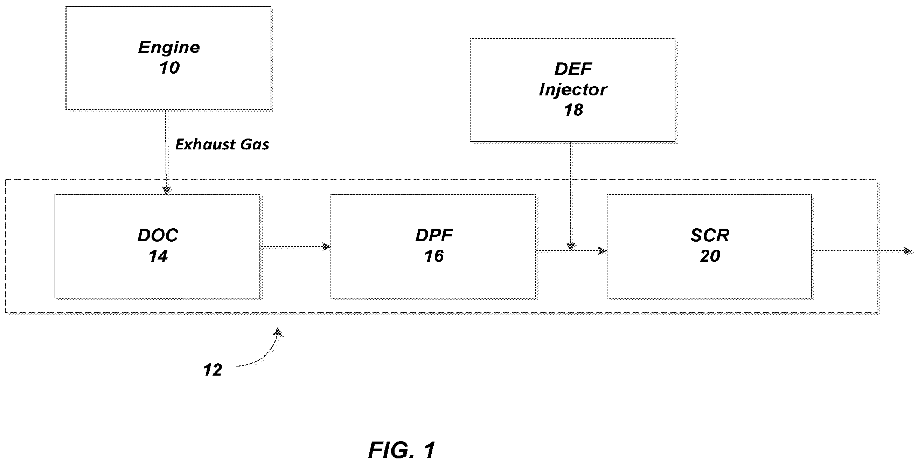

Attention is directed to **FIG. 1****,** which provides in block diagram form an overview of a compression ignition engine **10,** such as a diesel engine, outputting exhaust gas to an exhaust after-treatment system **12** which may include a diesel oxidation catalyst (DOC) chamber **14** which connects to a diesel particulate filter (DPF) **16** which then feeds the selective catalyst reduction (SCR) system **20.** The DOC **14** can serve to convert NO to NO₂ and remove hydrocarbons (HC) according to the following general reactions:

**2NO + O₂ → 2NO₂**

**2CO + O₂ → 2CO₂**

**4HC + 5O₂ → 4CO₂ + 2H₂O**

A diesel emission fluid (DEF) injector and reservoir is provided at **18** which contains an aqueous based urea solution that now also includes a catalyst precursor. Preferably aqueous urea based solutions that are employed typically include those having 30.0 wt. % to 40.0 wt. % urea, and preferably 32.5 wt. % urea.

The catalyst precursor herein is one that has a requisite amount of solubility in the aqueous urea solution and which then is capable of decomposition at temperatures similar to those that are relied upon to convert urea into ammonia. Preferably, the temperature range for decomposition of the catalyst precursor is 45 °C to 180 °C, more preferably in the range of 75 °C to 125 °C. Such catalyst precursors, upon decomposition at such temperatures in the exhaust gas after-treatment system will then operate to provide a target catalyst which serves to achieve one or more of the following: (1) hydrolyze the isocyanic acid to form ammonia to assist in SCR; (2) reduce and/or eliminate the build-up of relatively higher molecular weight deposits that would otherwise be formed from the isocyanic acid; and (3) decompose the relatively higher molecular weight deposit compounds found in the exhaust gas after treatment system, such as within the SCR system **20** (e.g., biuret, triuret, cyanuric acid, ammelide, ammeline, and/or melamine). This decomposition is contemplated to occur at temperatures that are lower than the temperatures that are typically relied upon for their thermal decomposition (e.g. pyrolysis) and removal.

The catalyst precursors herein preferably include water soluble organometallic compounds that will upon decomposition provide the catalytic activity noted above. Preferably, such organometallic compounds include titanium acetates such as titanium(IV) acetate (C₈H₁₂O₈Ti) which is water soluble and has a boiling point of 117 °C and which is therefore suitable for use as part of the diesel emission fluid. Upon heating (exposure to elevated temperature exhaust gases) the titanium(IV) acetate will decomposes to provide catalytic titanium oxide which may proceed according to the following general reaction:

**C₈H₁₂O₈Ti + 8O₂ → TiO₂ + 8CO₂ + 6H₂O**

Accordingly, the titanium oxide (TiO₂) as the target catalyst will now conveniently serve to improve the exhaust gas treatment by hydrolyzing the isocyanic acid present to ammonia in order to reduce and/or eliminate the build-up of relatively higher molecular weight deposits. In addition, as noted, the TiO₂ can also allow for decomposition of any relatively high molecular weight deposits that may be present, and allow for such decomposition at relatively lower temperatures than ordinarily used for thermal (pyrolytic) decomposition.

Other water soluble organometallics that may be combined in the DEF are contemplated to include titanium(IV) bis(ammonium lactato)dihydroxide (C₆H₁₈N₂O₈Ti), which is another water soluble titanium complex and is available as a 50 wt. % in water solution (Sigma-Aldrich) with a flash point of 27 °C. Accordingly, upon exposure to elevated temperatures in the exhaust gases, the following accounts for the formation of the target titanium dioxide catalyst:

[**CH₃CH(O-)CO₂NH₄]₂ Ti(OH)₂ + 6O₂ → TiO₂ + 6CO₂ + 6H₂O + 2NH₃**

Another candidate catalyst precursor is contemplated to include titanium(III)oxalate decahydrate (Ti₂(C₂O₄)₃-10H₂O). It may therefore be appreciated the preferably, the catalyst precursor may therefore comprise one or more of titanium(IV) acetate, Ti(IV)bis(ammonium lactato)dihydroxide or titanium(III)oxalate. Accordingly, mixtures of such water soluble organometallic catalyst precursors may be employed.

Other preferred catalyst precursors are contemplated to include ammonium titanyl oxalate (ATO), C₄O₉N₂H₈Ti, having the following structure:

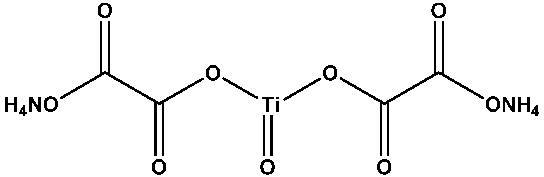

A still further preferred precursor includes titanium oxyacetylacetonate, C₁₀H₁₄O₅Ti having the following structure:

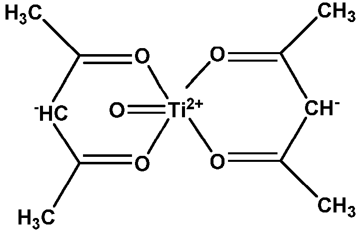

A still further preferred precursor includes Zr⁴⁺ compounds such as zirconia dioxide (ZrO₂). Similar to TiO₂ disclosed above, it is contemplated that ZrO₂ can similarly serve to improve the exhaust gas treatment by hydrolyzing the isocyanic acid present to ammonia:

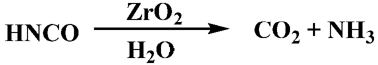

It is therefore contemplated herein that with respect to a given urea-water solution containing a catalyst precursor comprising a water soluble organometallic compound, such as an organometallic compound as noted above that decomposes to form TiO₂, one may include a Zr⁴⁺ type compound, such as ZrO₂. As may now be appreciated, in the event that isocyanic acid deposits are formed on the walls of the exhaust system or SCR catalyst, the ZrO₂ can additionally serve to reduce such deposits and improve SCR performance.

Therefore, in the broad context of the present disclosure, the organometallic compounds are preferably selected from organo-titanium compounds, which as noted have solubility in water, wherein the solubility is preferably at a level sufficient to allow the organo-titanium compound, as the catalyst precursor, to decompose in the exhaust gases and provide a sufficient amount of catalyst (TiO₂) to then hydrolyze the isocyanic acid present to ammonia. Such water solubility of the organometallic compound catalyst precursor in water is contemplated to be at a level of 0.1 wt. % to 25.0 wt. %, more preferably in the range of 0.1 wt. % to 10.0 wt. %, as well as 0.1 wt. % to 5.0 wt. %. The solubility is such that it is contemplated to be maintained at a temperature range between -11 °C (the freezing point of a 32.5% urea water solution) and 50 °C.

It is further contemplated the amount of catalyst, derived from the water soluble organometallic precursor, is then preferably formed in the exhaust after-treatment system 12 at a level of 0.01 wt% to 1.0 wt% within the introduced DEF comprising the aqueous urea solution. Accordingly, one may preferably employ an amount of, e.g. titanium(IV) acetate (C₈H₁₂O₈Ti) precursor in the aqueous urea solution, such that upon delivery and decomposition to titanium oxide in the exhaust gas after-treatment system, the level of titanium oxide in the injected DEF is in the range of 0.01 wt. % to 1.0 wt. %. Moreover, as alluded to above, one may optionally include ZrO₂ in the urea water solution to augment the ability to reduce isocyanic acid deposits. Therefore, it is contemplated that the level of ZrO₂ in the urea-water solution, either on its own or in combination with the organometallic precursor catalyst, is similarly in the range of 0.01 wt% to 1.0 wt.%.

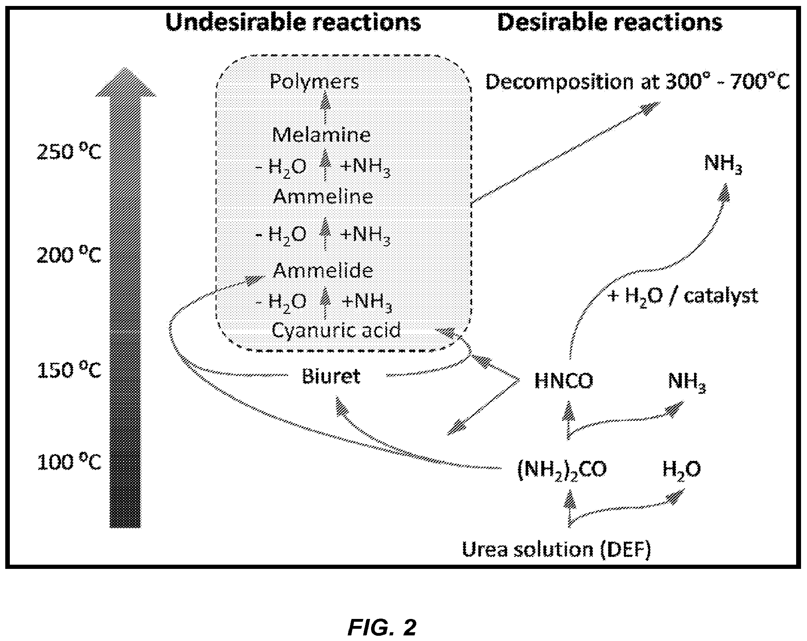

Attention is next directed to **FIG. 2** which now provides another useful overview of the disclosure herein. As can be seen, the DEF (aqueous urea solution) upon exposure to heat from the exhaust gases (~ 100 °C) will decompose to provide both isocyanic acid and the desirable ammonia for feeding to the SCR system. The isocyanic acid will then be prone to convert, via what is broadly identified as an undesirable reaction pathway, to the relatively higher molecular weight compound deposits, containing one or more of biuret, cyanuric acid, ammelide, ammeline, melamine and other macromolecular and polymer type compounds. Such compounds will then compromise the efficiency of the SCR system to reduce levels of NOx.

Accordingly, by placement of the catalyst precursor herein into the DEF, as shown in **FIG. 2****,** the catalyst precursor is such that upon exposure to exhaust gases and temperatures preferably in the range of about 100 °C to 300 °C, the catalyst precursor (soluble organometallic compound) is converted into catalyst (e.g. titanium oxide) and the catalyst reduces or eliminates the conversion of the isocyanic (HNCO) to the relatively high molecular weight deposits. Instead, as illustrated, the isocyanic acid is converted to additional amounts of ammonia for the SCR process. It is noted that deposit formation may be particularly prominent at temperatures in the range of 185 °C to 250 °C. Accordingly, the use of the catalyst precursors herein to reduce deposition formation that occur in the temperature range of 185 °C to 250 °C is particularly advantageous.

In addition, the catalyst precursors herein can serve to facilitate a relatively lower temperature degradation of the relatively high molecular weight compounds forming the deposits comprising biuret, cyanuric acid, ammelide, ammeline and melamine, and such degradation may now occur in the temperature range of 130 °C to 300 °C.

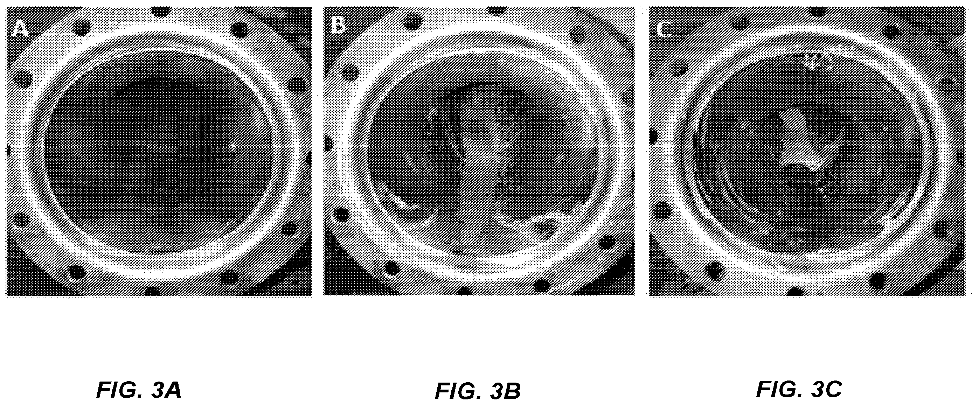

Reference is next made to **FIG. 3** which illustrates in identified images "**A**", "**B**" and "**C**" how the addition of ATO to a urea water solution can impact the formation of deposits. **FIG. 3** image **"A"** has the highest concentration of ATO at 0.1 mol % (1.74 g ATO/liter UWS). **FIG. 3** image **"B"** has a concentration of 0.05 mol % ATO, (0.87 g ATO/liter UWS). **FIG. 3** image "**C**" is UWS without addition ATO. It is apparent that increasing the concentration of ATO incorporated into the UWS results in a decrease in the amount of formed deposits.

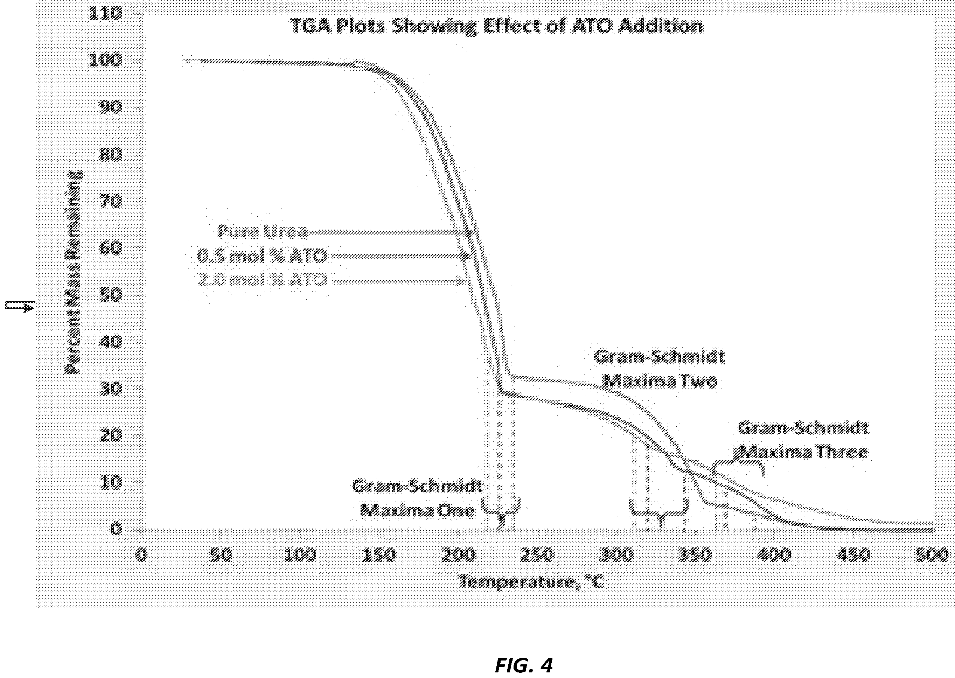

Reference is next made to **FIG. 4** which identifies the use of thermogravimetric analysis (TGA) coupled to a Fourier Transform Infrared (FTIR) spectrophotometer. Samples were prepared by incorporating the identified concentration of ATO with urea via lyophilization (freeze drying). Samples then underwent TGA and the evolved gases were analyzed using IR spectroscopy. **FIG. 4** shows the overlaid TGA data from three samples: pure urea, 0.5 mol % ATO in urea, and 2.0 mol % ATO in urea. The Gram-Schmidt values shown in the plot are an indication of the temperature at which the maximum amounts of gasses from the sample were evolved. As a general trend, the maximum off-gassing events occurred at lower temperatures as the concentration of ATO in the sample increased. The decrease in the temperatures of Gram-Schmidt maxima indicates that ATO catalyzes the overall decomposition of urea as given by the following reaction:

**CO(NH₂)₂ + H₂O → 2NH₃ + CO₂**

An addition testing evaluation was run to further confirm the use of the catalyst precursors herein to reduce deposits. Two conditions were considered. Condition 1 consisted of a moderate duty cycle injection at relatively low temperature. More specifically, a DEF injector duty cycle of 13.1%, a target gas temperature of 215 °C, engine speed of 1375 rpm, exhaust flow of 670 kg/hr for a time of 1.0 hour. Condition 2 consisted of a high duty cycle injection at high temperature. In both cases after 1.0 hour the exhaust pipe was disassembled and deposits were collected and weighed.

For Condition 1, and utilizing a DEF. namely a urea water solution, after 1.0 hour of operation 0.4 g of deposits were recovered from the mixer region and 4.2 g were recovered from the elbow region, with a total amount of deposits of 4.6 g. By contrast, when using 0.2 mol. % ATO in the same urea water solution, only 0.2 g of deposits were recovered from the mixer region and only 0.7 g of deposits were recovered from the elbow region for a total mass of recovered deposits of 0.9 g. As may therefore be appreciated, in the absence of the ATO catalyst precursor the deposit mass increased 411 % (0.9 g versus 4.6g). For Condition 2, and again utilizing a urea water solution, after 1.0 hour of operation, 6.4 g of deposits were recovered from the mixer region. By contrast, when using 0.2 mol. % ATO in the same urea water solution, only 3.5 g of deposits were recovered from the mixer region. As may therefore be appreciated, in the absence of the ATO catalyst precursor the deposit mass increased 45 % (6.4 g versus 3.5 g).

Accordingly, some of the remarkable benefits of the aforementioned use of the catalyst precursors herein therefore includes the ability to now improve emissions by allowing for DEF injection at relatively lower exhaust temperatures (e.g. 185 °C to 250 °C) to then reduce deposit formation that otherwise compromises the efficiency of the SCR system. In other words, the catalyst precursors herein will provide for reduced cold start emissions on vehicles equipped with a SCR catalyst. In addition, the reduction in deposit formation as described herein is such that it is contemplated to reduce system backpressure. System backpressure in turn results in an increase in fuel consumption. By reducing deposits there will therefore be a reduction in fuel consumption in the vehicle. In addition, by reducing deposits, the requirement for a high temperature regeneration period to breakdown and remove the deposits can be reduced or avoided. Furthermore, the identified high molecular weight deposits herein are such that they tend to have corrosive effects when in contact with the metals utilized in exhaust piping. Reduction or removal of such deposits therefore is contemplated to extend the lifetime of the metallic exhaust system and reduce or eliminate loss of its structural integrity.

As can now be appreciated from all of the above, the injection of an aqueous based urea solution containing a catalyst precursor comprising a water soluble organometallic compound is an effective method to reducing deposits. However, it has also been observed that the stability of the organometallic catalyst precursor can become an issue with fluctuations in the pH of the aqueous based urea solution containing the precursor. As the temperature of the aqueous based urea solution increases, the alkalinity of the solution also increases due to an increase in the concentration of dissolved ammonium and hydroxide ions. This shift in pH can then cause the organometallic compound to precipitate out of solution and reduce its effectiveness. According to the claimed invention, the pH of the aqueous based urea solution containing the organometallic catalyst precursor is monitored and maintained within an appropriate pH window. More specifically, the pH of the aqueous based urea solution containing the organometallic catalyst precursor is monitored and maintained to a pH of less than or equal to 10.0 (i.e. ≤ 10.0), and in a more preferred embodiment, to a pH in the range of 7.0 to 10.0.

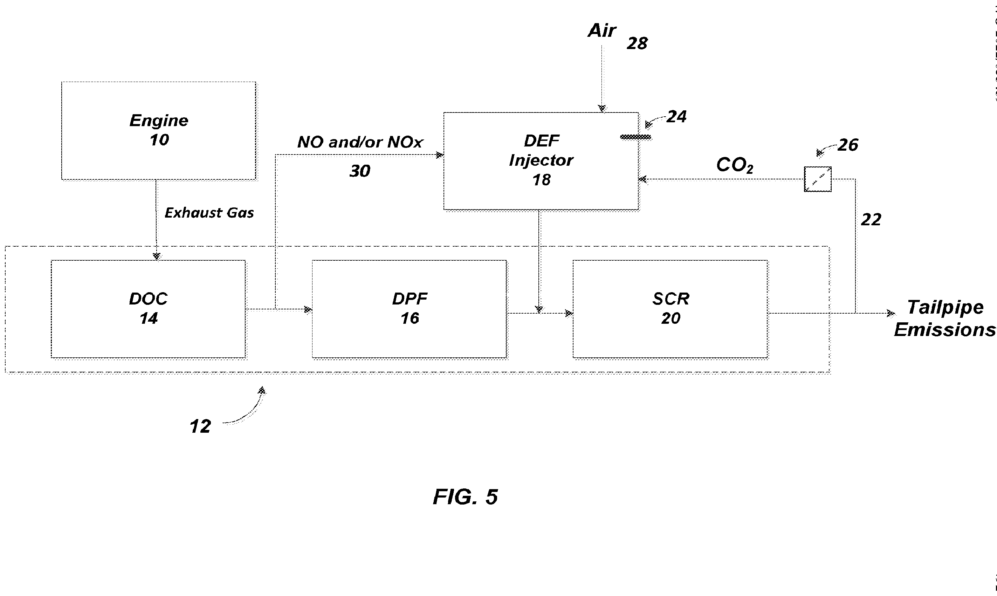

With attention directed to **FIG. 5****,** it is noted that tailpipe exhaust includes carbon dioxide (CO₂) emissions which can be present at levels of 6.0 % to 16.0 % by volume. Accordingly, as illustrated in **FIG. 5****,** and shown generally at pathway **22,** it is contemplated that one can recirculate a portion of the exhaust gas containing CO₂ into the aqueous based urea solution containing the organometallic catalyst precursor. The following may then occur to form carbonic acid:

**CO₂ + H₂O → H₂CO₃**

As a result of the introduction of CO₂ and the ensuing formation of carbonic acid (**H₂CO₃**), the alkalinity of the aqueous based urea solution containing the organometallic precursor contained in reservoir **18,** which otherwise may tend to increase due to temperature increases, can be regulated to maintain the pH to a value of ≤ 10.0 and in particular, to remain in the range of 7.0 to 10.0. Accordingly, a pH indicator, such as an ion selective electrode or pH probe with feedback, is placed into the aqueous based urea solution containing the organometallic precursor, as shown generally at **24.** In addition, in a more preferred configuration, the tailpipe exhaust pathway **22** may include a CO₂ membrane filter **26** to filter out and only allow passage of CO₂ from the tailpipe emissions. Such membrane may preferably include the CO₂ membrane described in U.S. Patent No. 8,454,732. It may therefore be appreciated that by monitoring the ion selective electrode or pH indicator **24,** one can selectively control the amount of CO₂ to maintain the pH of the aqueous based urea solution containing the organometallic precursor to the desired levels noted herein.

Furthermore, as can be seen, an air intake **28** can be provided to the reservoir **18.** Accordingly, if the urea water solution containing the organometallic precursor becomes acidic (e.g. a pH of less than 7.0 due to a relative high concentration of CO₂ and ensuing carbonic acid formation, air may be introduced which is also contemplated to then reduce the CO₂ concentration within reservoir **18** so that acidic pH can be minimized or avoided. Accordingly, one can therefore again monitor pH probe **24** and in the event that pH of the reservoir containing the aqueous based urea solution and organometallic catalyst precursor becomes acidic or begins to drop at unacceptable rate, one may introduce air to attenuate or prevent such pH changes.

Furthermore, within the DOC chamber **14** there is conversion of NO to NO₂ and therefore, a portion of exhaust immediately upstream of chamber **14** may be routed into the reservoir **18** containing the urea water solution and organometallic precursor, via pathway **30.** The introduction of NOx (NO and/or NO₂) will hydrolyze in water and form nitric acid (HNO₃) and/or nitrous acid (HNO₂). The introduction of such acids into the chamber 18 will therefore again serve to provide acidity and control the pH of the aqueous urea solution and organometallic catalyst precursor from achieving a pH value of greater than 10.0 due to temperature increase, as described herein.

From the above, it should now be apparent that the control of the pH level of a diesel emissions fluid reservoir comprising an aqueous based urea solution including a catalyst precursor comprising a water soluble organometallic compound, may be achieved by implementing one or more of the following pH adjusting procedures: (1) introducing exhaust gas comprising CO₂ into the reservoir; (2) introducing air into the reservoir; and/or (3) introducing NOx (NO and/or NO₂). Preferably, one may therefore select and implement one, two or all three of these pH adjusting procedures. Such control may be implemented by a computer processing unit programmed to monitor pH of the reservoir **18** and receive pH readings and select one or more of the above identified pH adjusting procedures to maintain pH at a value of < 10.0, and as noted, preferably within the range of 7.0 to 10.0.

## Claims

1. A method of controlling the pH level of a diesel emission fluid comprising:
(a) providing a diesel emission fluid reservoir containing an aqueous based urea solution including a catalyst precursor comprising a water soluble organometallic compound, wherein said reservoir includes a pH probe to monitor pH of said solution;
(b) controlling the pH to a value of < 10.0.

2. The method of claim 1 wherein said pH is controlled to a value in the range of 7.0 to 10.0.

3. The method of claim 1 wherein said pH is controlled by introducing exhaust gas comprising CO₂ into said reservoir.

4. The method of claim 1 wherein said pH is controlled by introducing air into said reservoir.

5. The method of claim 1 wherein said pH is controlled by introducing NOx into said reservoir.

6. The method of claim 1 wherein said water soluble organometallic precursor is soluble in said aqueous based urea solution at a level of 0.1 wt. % to 25.0 wt. %.

7. The method of claim 1 wherein said water soluble organometallic precursor comprises an organo-titanium compound which converts to a titanium oxide catalyst.

8. The method of claim 7 wherein said titanium oxide is formed at a concentration of 0.01 wt. % to 1.0 wt.% in said diesel emissions fluid.

9. The method of claim 7 wherein said water soluble organo-titanium compound
comprises titanium(IV) acetate.

10. The method of claim 7 wherein said water soluble organo-titanium compound comprises titanium(IV) bis(ammonium lactato)dihydroxide, or
titanium(III)oxalate.

11. The method of claim 7 wherein said water soluble organo-titanium compound comprises ammonium titanyl oxalate, or
titanium oxyacetylacetonate.

12. The method of claim 1 wherein said diesel emission fluid also contains zirconium dioxide.

13. The method of claim 1, wherein
said step (b) of controlling the pH to a value of < 10.0 is carried out by selecting and implementing at least two of the following pH adjusting procedures:
(i) introducing exhaust gas comprising CO₂ into said reservoir;
(ii) introducing air into said reservoir;
(iii) introducing NOx into said reservoir.

14. The method of claim 13 wherein said pH is controlled to a value in the range of 7.0 to 10.0.

15. A diesel emission fluid apparatus comprising:
a diesel emission fluid reservoir to contain an aqueous based urea solution including a catalyst precursor comprising a water soluble organometallic compound, wherein said reservoir includes a pH probe to monitor pH of said solution;
a controller which monitors said pH that is configured to control said pH to a level of < 10.0 by selecting and implementing at least one of the following:
(i) introducing exhaust gas comprising CO₂ into said reservoir;
(ii) introducing air into said reservoir; or
(iii) introducing NOx into said reservoir.

## Patentansprüche

1. Verfahren zum Steuern des pH-Werts eines Dieselemissionsfluids, umfassend:
(a) Bereitstellen eines Dieselemissionsfluidreservoirs, das eine Harnstofflösung auf wässriger Basis enthält, die einen Katalysatorvorläufer umfasst, der eine wasserlösliche metallorganische Verbindung umfasst, wobei das Reservoir eine pH-Sonde zum Überwachen des pH-Werts der Lösung umfasst;
(b) Steuern des pH-Werts auf einen Wert von < 10,0.

2. Verfahren nach Anspruch 1, wobei der pH-Wert auf einen Wert im Bereich von 7,0 bis 10,0 gesteuert wird.

3. Verfahren nach Anspruch 1, wobei der pH-Wert durch Einleiten von Abgas, das CO₂ umfasst, in das Reservoir gesteuert wird.

4. Verfahren nach Anspruch 1, wobei der pH-Wert durch Einleiten von Luft in das Reservoir gesteuert wird.

5. Verfahren nach Anspruch 1, wobei der pH-Wert durch Einleiten von NOx in das Reservoir gesteuert wird.

6. Verfahren nach Anspruch 1, wobei der wasserlösliche metallorganische Vorläufer in der Harnstofflösung auf wässriger Basis in einem Gehalt von 0,1 Gew.-% bis 25,0 Gew.-% löslich ist.

7. Verfahren nach Anspruch 1, wobei der wasserlösliche metallorganische Vorläufer eine Organotitanverbindung umfasst, die sich in einen Titanoxidkatalysator umwandelt.

8. Verfahren nach Anspruch 7, wobei das Titanoxid in einer Konzentration von 0,01 Gew.-% bis 1,0 Gew.-% in dem Dieselemissionsfluid gebildet wird.

9. Verfahren nach Anspruch 7, wobei die wasserlösliche Organotitanverbindung Titan(IV)acetat umfasst.

10. Verfahren nach Anspruch 7, wobei die wasserlösliche Organotitanverbindung Titan(IV)bis(ammoniumlactato)dihydroxid oder
Titan(III)oxalat umfasst.

11. Verfahren nach Anspruch 7, wobei die wasserlösliche Organotitanverbindung Ammoniumtitanyloxalat oder
Titanoxyacetylacetonat umfasst.

12. Verfahren nach Anspruch 1, wobei das Dieselemissionsfluid auch Zirkoniumdioxid enthält.

13. Verfahren nach Anspruch 1, wobei
der Schritt (b) des Steuerns des pH-Werts auf einen Wert von < 10,0 durch Auswählen und Implementieren von mindestens zwei der folgenden pH-Einstellprozeduren durchgeführt wird:
(i) Einleiten von Abgas, das CO₂ umfasst, in das Reservoir;
(ii) Einleiten von Luft in das Reservoir;
(iii) Einleiten von NOx in das Reservoir.

14. Verfahren nach Anspruch 13, wobei der pH-Wert auf einen Wert im Bereich von 7,0 bis 10,0 gesteuert wird.

15. Dieselemissionsfluidvorrichtung, umfassend:
ein Dieselemissionsfluidreservoir, um eine Harnstofflösung auf wässriger Basis zu enthalten, die einen Katalysatorvorläufer umfasst, der eine wasserlösliche metallorganische Verbindung umfasst, wobei das Reservoir eine pH-Sonde zum Überwachen des pH-Werts der Lösung umfasst;
eine Steuerung, die den pH-Wert überwacht, die konfiguriert ist, um den pH-Wert durch Auswählen und Implementieren von mindestens einem der Folgenden auf einen Wert von < 10,0 zu steuern:
(i) Einleiten von Abgas, das CO₂ umfasst, in das Reservoir;
(ii) Einleiten von Luft in das Reservoir; oder
(iii) Einleiten von NOx in das Reservoir.

## Revendications

1. Procédé de régulation du niveau de pH d'un fluide d'émission diesel comprenant :
(a) la fourniture d'un réservoir de fluide d'émission diesel contenant une solution d'urée à base aqueuse incluant un précurseur de catalyseur comprenant un composé organométallique hydrosoluble, dans lequel ledit réservoir inclut une sonde de pH pour surveiller le pH de ladite solution ;
(b) la régulation du pH à une valeur ≤ 10,0.

2. Procédé selon la revendication 1 dans lequel ledit pH est régulé à une valeur dans la plage de 7,0 à 10,0.

3. Procédé selon la revendication 1 dans lequel ledit pH est régulé en introduisant un gaz d'échappement comprenant du CO₂ dans ledit réservoir.

4. Procédé selon la revendication 1 dans lequel ledit pH est régulé en introduisant de l'air dans ledit réservoir.

5. Procédé selon la revendication 1 dans lequel ledit pH est régulé en introduisant du NO_{X} dans ledit réservoir.

6. Procédé selon la revendication 1 dans lequel ledit précurseur organométallique hydrosoluble est soluble dans ladite solution d'urée à base aqueuse à un niveau de 0,1 % en poids à 25,0 % en poids.

7. Procédé selon la revendication 1 dans lequel ledit précurseur organométallique hydrosoluble comprend un composé organo-titane qui se transforme en un catalyseur d'oxyde de titane.

8. Procédé selon la revendication 7 dans lequel ledit oxyde de titane est formé à une concentration de 0,01 % en poids à 1,0 % en poids dans ledit fluide d'émissions diesel.

9. Procédé selon la revendication 7 dans lequel ledit composé organo-titane hydrosoluble comprend de l'acétate de titane(IV).

10. Procédé selon la revendication 7 dans lequel ledit composé organo-titane hydrosoluble comprend du dihydroxyde de titane(IV) bis(lactate d'ammonium) ou de l'oxalate de titane(III).

11. Procédé selon la revendication 7 dans lequel ledit composé organo-titane hydrosoluble comprend de l'oxalate de titanyle d'ammonium ou de l'oxyacétylacétonate de titane.

12. Procédé selon la revendication 1 dans lequel ledit fluide d'émission diesel contient également du dioxyde de zirconium.

13. Procédé selon la revendication 1, dans lequel
ladite étape (b) de régulation du pH à une valeur ≤ 10,0 est réalisée en sélectionnant et en mettant en œuvre au moins deux des procédures d'ajustement de pH suivantes :
(i) introduction de gaz d'échappement comprenant du CO₂ dans ledit réservoir ;
(ii) introduction d'air dans ledit réservoir ;
(iii) introduction de NO_{X} dans ledit réservoir.

14. Procédé selon la revendication 13 dans lequel ledit pH est régulé à une valeur dans la plage de 7,0 à 10,0.

15. Appareil de fluide d'émission diesel comprenant :
un réservoir de fluide d'émission diesel pour contenir une solution d'urée à base aqueuse incluant un précurseur de catalyseur comprenant un composé organométallique hydrosoluble, dans lequel ledit réservoir inclut une sonde de pH pour surveiller le pH de ladite solution ;
un régulateur qui surveille ledit pH qui est configuré pour réguler ledit pH à un niveau ≤ 10,0 en sélectionnant et en mettant en œuvre au moins l'une des suivantes :
(i) introduction de gaz d'échappement comprenant du CO₂ dans ledit réservoir ;
(ii) introduction d'air dans ledit réservoir ; ou
(iii) introduction de NO_{X} dans ledit réservoir.
